# EUROPEAN PATENT SPECIFICATION

(11) **EP 0 658 049 B1**
(45) Date of publication and mention of the grant of the patent: **12.08.1998**
(21) Application number: 94118174.5
(22) Date of filing: 18.11.1994
(51) Int. Cl.: H04N 5/64, H04N 5/645

(54) **Mechanism for fixing a picture tube in its case**
Mechanismus zum Befestigen einer Bildröhre in ihrem Gehäuse
Mécanisme pour la fixation d'un tube d'image dans son boîtier

(30) Priority: 07.12.1993 FI 935474
(43) Date of publication of application: 14.06.1995
(73) Proprietor: NOKIA TECHNOLOGY GmbH, 75175 Pforzheim (DE)
(72) Inventor: Koivusilta, Raimo, SF-20110 Turku (FI); Syrjälä, Kai, SF-25130 Muurla (FI)

(56) References cited:
- WO-A-86/06447
- DE-U- 8 906 680
- FR-A- 2 575 244
- FR-A- 2 590 633
- FR-A- 2 594 501
- US-A- 5 054 953
- IBM TECHNICAL DISCLOSURE BULLETIN, vol. 32, no. 9A, 28 February 1990 NEW YORK US, pages 377-375, XP 000083112 'SELF-LEVELING MOUNTING FOOT'

## Description

The present invention relates to a self-adjusting mechanism for fixing the picture tube of a TV set or monitor to the case thereof without clearance, whereat the distance between the fixing points may vary.

As a rule, the picture tube is in general fixed with screws directly to the TV set/monitor case. Endeavours are made to solve the problem of tolerance by precise dimensioning. Such conventional screw mounting is not self-adjusting, whereby a gap between the picture tube and the case often becomes a problem.

Fixing means assemblies with movable components are also known in the art. The EP-A-0 302 026 document discloses a self-adjusting means for locking two objects together when the distance between the fixing points of the objects is variable. The means of said reference comprises a tubular piece 14 and a cylindrical piece 26 which is slidable and non-rotatable within the piece 14. In said patent, elastic members 40,52 are used, with the aid of which the piece 26 can be lifted against a bracket 12. The parts to be joined are secured to each other with a screw 38 establishing a junction between the pieces 26 and 14. The fixing force is achieved with screws so that the screw becomes fixed both to the case and to the movable parts, thereby locking the picture tube in place. The problem embarrassing said means is lack of reliability, nor is it applicable owing to the dimensioning required in association with current design products. Moreover, the means of the reference is complex and includes a number of separate parts, making the manufacturing costly and cumbersome.

WO-A-8606447 describes a fixing system consisting of a metal anchor bolt and a metal sleeve for securing a workpiece to concrete or the like. The workpiece according to this document is mounted flat to the concrete. Self-adjustment of the mounting distance between workpiece and concrete, which is desirable when the workpiece has 3 or more fixing points and when the fixing points of the workpiece are not exactly on one and the same level or when the concrete surface is not absolutely flat, is not described. Furthermore, the combination of a pin with an expansion portion and a sleeve as described in WO-A-8606447 is not suitable for softer materials such as thermoplastic resin especially when such material only has a wall thickness in the same order of magnitude as the pin diameter or even smaller.

FR-A-2 590 633 describes a solution with a metal screw, a plastic "nut" with an expansion portion and a metal cap with protruding flanges covering part of the "nut".

This fixing system described in this document self-adjusts the mounting distance between the workpiece and the mounting base. It can also be used for mounting into plastic parts with relatively low wall thickness. However, it requires this above-mentioned metal cap which needs several production steps such as punching, cutting and bending and it needs a shape which prevents rotation of nut and cap during the first phase of fixation as long as both parts are still loose in the corresponding recess. The solution as described in FR-A-2 590 633 can therefore not be used when the above-mentioned corresponding recess is a round pocket hole.

It is therefore the task of this invention to provide a self-adjusting mechanism suitable e. g. for fixing a picture tube to a thermoplastic or similar case with simple rotary-symmetrical parts.

The distance between the picture tube and the fixing points of the case thereof is not necessarily always of equal magnitude. However, with the means of the invention, such parts can be joined in which the tolerances may vary.

Compression in the juncture between the picture tube and the case produces torsion of the case and stresses between the components. On the other hand, clearance in the juncture causes defects in the external appearance of the design. Said problems can be eliminated by means of a fixing mechanism according to the present invention.

In the fixing mechanism according to the invention, a fixing sleeve is produced in the fixing points of the picture tube, advantageously in each corner, in a TV set or monitor case. A wedge bolt known per se is inserted into the sleeve, said bolt comprising a bolt with a widened lower end, and around the bolt a friction sleeve. The upper end of the wedge bolt is provided with a thread, said upper end being inserted through a hole in the mounting lug of the picture tube, and a nut screwed on the thread. A great friction prevails on the outer surface of the friction sleeve, whereat the wedge bolt is secured to the fixing sleeve with the aid of friction and/or deformation produced by the wedge bolt in the fixing sleeve. The fixing is thus provided without a clearance and any excessive compression between the pieces.

The fixing mechanism according to the invention is made of metal and/or plastic. Preferredly, it is completely made of plastic, except the friction sleeve, which is advantageously of rubber material.

The essential characteristic features of the invention are presented in the annexed claims.

The invention is described below more in detail, referring to the the figures, in which
- Figure 1: presents the mechanism of the invention as an exploded view in fixing a telvision tube to the case, and
- Figure 2: presents a mechanism according to the invention assembled as a sectional elevational image.

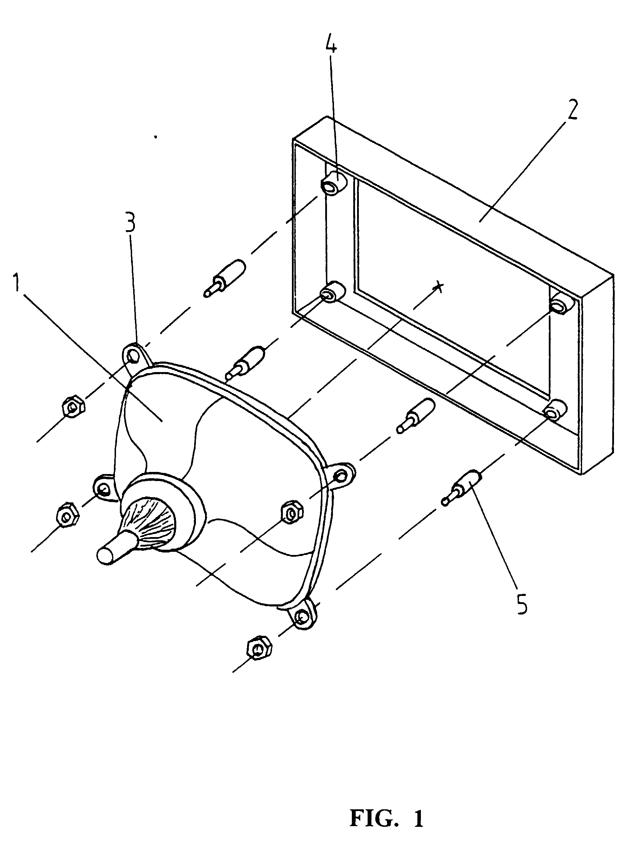

The aim in the mechanism of the invention is to fix to each other the television picture tube 1 and the case 2 thereof presented in Fig. 1 without producing excessive compression therebetween, which would damage the surfaces or that a gap would be left therebetween.

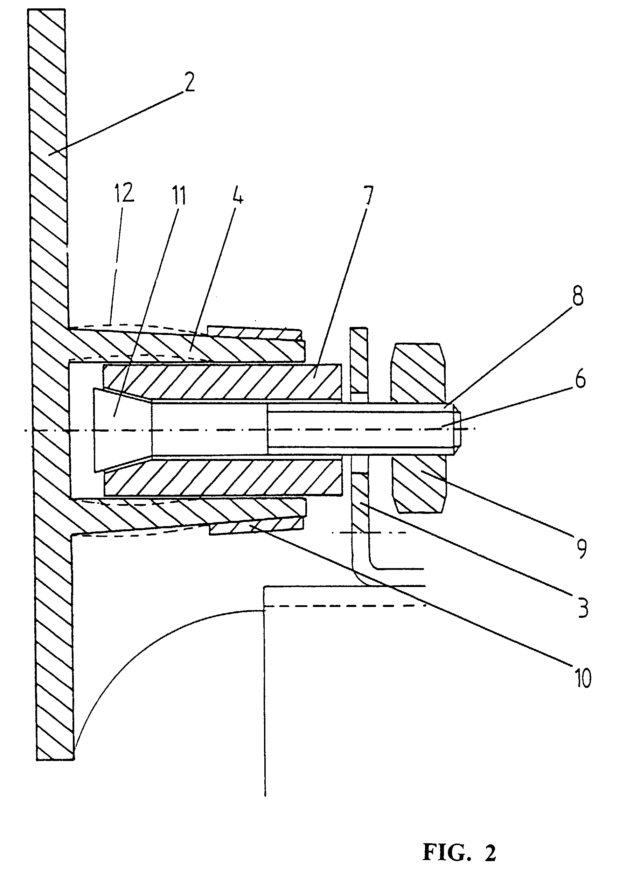

Figure 1 presents a television picture tube 1 in which each corner is provided with a mounting lug 3 with holes. The TV set case 2 is provided with fixing sleeves 4 in the points in register with the mounting lugs 3, advantageously made by casting. In said fixing sleeves 4, wedge bolts 5 known per se are inserted, the detailed design whereof being shown in Fig. 2. The inner surface of the fixing sleeves 4 can be circular, nut-shaped, or entirely free in shape.

Fig. 2 presents the structure and operation of a wedge bolt in detail. The wedge bolt comprises the bolt 6 itself and a friction sleeve 7 therearound. At the end part 11 of the lower end thereof, the bolt 6 is conically widening towards the lower end thereof. The encircling friction sleeve 7, being cylindrical on the outer circumference, is also of a shape in register with this radial widening on the inner surface of the lower part thereof so that the bolt 6 can be drawn into the friction sleeve 7 through the lower part of thereof, the bolt 6 and the friction sleeve 7 being in close connection with each other on the entire length of the sleeve 7. The upper end of the bolt 6 is provided with threads 8.

The upper end of the bolt 6 is carried through the mounting lug 3 and fixed in place with the aid of a nut 9. The nut 9 is tightened to a given torque, whereby with the aid of the friction between the inner surface of the fixing sleeve 4 and the outer surface of the friction sleeve 7 the wedge bolts 5 urge the picture tube 1 against the case 2. The friction sleeve 7 is partly allowed to rotate during the fixing against the inner surface of the fixing sleeve 4 in order to produce as good friction as possible.

Around the fixing sleeve 4, preferredly at the proximity of the upper end thereof, a stop ring 10 is provided to receive the forces created by the wedge bolt and to prevent the sleeve 4 from being broken.

Thanks to the axial compressive force, the bolt 6 of the friction bolt tends to rise upwards out of the case 2, so that the radial widening of the end part 11 in the lower end of the bolt 6 is compressed against the lower part of the friction sleeve 7, respectively shaped in the inner surface, and urges the friction sleeve 7 cylindrical on the outer circumference against the inner surface of the fixing sleeve 4 joined to the case 2. The widening of the lower end of the wedge bolt may, while being urged against the inner surface of the fixing sleeve 4, produce a deformation 12 in the lower part of the fixing sleeve 4, therethrough changing the lower part of the sleeve 4 barrel-shaped and securing the grip of the fixing even more. The friction sleeve is simultaneously being compressed against the mounting lug 3.

The distance between the fixing points of the picture tube 1 and the case 2 may vary within certain limits, whereby the tolerance variations are compensated by means of the depth to which the friction bolt 5 is inserted in the fixing sleeve 4. The length of the friction sleeve 7 of the friction bolt is substantially consistent with the depth of the fixing sleeve 4. In the other direction the tolerance is provided by dimensioning the holes of the mounting lugs 3 slightly larger than the diameter of the bolt 6.

The friction sleeve 7 is preferredly made of soft rubber or some other material with good friction properties. The friction may further be increased by treating the outer surface of the friction sleeve in a manner adding to its friction.

## Claims

1. A self-adjusting mechanism for fixing to each other the picture tube (1) and the case (2) of a TV set or monitor, fixing members in the picture tube (1) incorporating projecting mounting lugs (3), characterized in that the case (2) is provided with a fixing sleeve (4) in register with each mounting lug (3) of the picture tube (1), in which sleeve a wedge bolt (5) consisting of a bolt (6) with a conically widening inner end (11) and an elastic friction sleeve (7) tightly encircling the bolt (6) has been inserted, the threaded outer bolt end being carried through a hole in the mounting lug (3) of the picture tube (1), and a nut (9) is screwed thereon so that when the nut is tightened, the conically widening inner end (11) of the bolt (6) will first pull the wedge bolt (5) towards the mounting lug until the friction sleeve touches the mounting lug and then urge the elastic friction sleeve (7) against the inner surface of the fixing sleeve (4).

2. Mechanism according to claim 1, characterized in that the friction sleeve (7) is made of material having good friction properties, particularly of rubber.

3. Mechanism according to claim 2, characterized in that the outer surface of the friction sleeve (7) has been treated in a manner adding to its friction.

4. Mechanism according to claim 1, characterized in that around the fixing sleeve (4), adjacent to the upper part thereof, a stop ring (10) is provided.

5. Mechanism according to claim 1, characterized in that the conically widening inner end (11) of the bolt (6), when being urged against the inner surface of the fixing sleeve (4) of the elastic friction sleeve (7), tightly encircling the bolt (6), produces a deformation (12) in the lower part of the fixing sleeve (4).

6. Mechanism according to any one of the preceding claims, characterized in that the depth of the fixing sleeve (4) is substantially consistent with the length of the friction sleeve (7).

## Patentansprüche

1. Selbstjustierender Mechanismus, um die Bildröhre (1) und das Gehäuse (2) eines Fernsehapparates oder Monitors aneinander zu befestigen, wobei Befestigungselemente an der Bildröhre (1) vorstehende Montagelaschen (3) aufweisen, dadurch gekennzeichnet, daß das Gehäuse (2) mit Befestigungshülsen (4) versehen ist, die jeweils mit den Montagelaschen (3) der Bildröhre (1) übereinstimmen, wobei in diese Hülse eine Klemmschraube (5) bestehend aus einer Schraube (6) mit einem konisch aufgeweiteten inneren Ende (11) und einer elastischen Reibungshülse (7), die die Schraube (6) eng umschließt, eingesetzt wurde, wobei das mit Gewinde versehene äußere Schraubenende durch ein Loch in der Montagelasche (3) der Bildröhre (1) geführt und eine Mutter (9) darauf geschraubt wird, so daß das konisch aufgeweitete innere Ende (11) der Schraube (6), wenn die Mutter festgezogen wird, zunächst die Klemmschraube (5) in Richtung auf die Montagelasche zieht, bis die Reibungshülse die Montagelasche berührt, und dann die elastische Reibungshülse (7) gegen die Innenseite der Befestigungshülse (4) drückt.

2. Mechanismus nach Anspruch 1, dadurch gekennzeichnet, daß die Reibungshülse (7) aus einem Material mit guten Reibungseigenschaften besteht, insbesondere aus Gummi.

3. Mechanismus nach Anspruch 2, dadurch gekennzeichnet, daß die Außenseite der Reibungshülse (7) auf eine Weise behandelt wurde, die deren Reibung erhöht.

4. Mechanismus nach Anspruch 1, dadurch gekennzeichnet, daß um die Befestigungshülse (4) neben deren oberem Teil ein Anschlagring (10) vorgesehen ist.

5. Mechanismus nach Anspruch 1, dadurch gekennzeichnet, daß das konisch aufgeweitete innere Ende (11) der Schraube (6), wenn sie gegen die Innenseite der Befestigungshülse (4) der elastischen Reibungshülse (7) gedrückt wird und dabei die Schraube (6) eng umschließt, eine Verformung (12) im unteren Teil der Befestigungshülse (4) erzeugt.

6. Mechanismus nach einem der vorherigen Ansprüche, dadurch gekennzeichnet, daß die Tiefe der Befestigungshülse (4) im wesentlichen mit der Länge der Reibungshülse (7) übereinstimmt.

## Revendications

1. Mécanisme autoréglable pour la fixation l'un à l'autre du tube cathodique (1) et du boîtier (2) d'un appareil ou moniteur de télévision, des éléments de fixation dans le tube cathodique (1) incorporant des oreilles de montage (3) faisant saillie, caractérisé en ce que le boîtier (2) comporte une douille de fixation (4) en correspondance avec chaque oreille de montage (3) du tube cathodique (1), dans laquelle a été inséré un boulon à coin (5) consistant en un boulon (6) dont l'extrémité intérieure (11) présente un élargissement conique et un manchon (7) à frottement élastique enserrant le boulon (7), l'extrémité extérieure filetée du boulon a été passée à travers un trou de l'oreille de montage (3) du tube cathodique (1), et un écrou (9) est vissé sur celle-ci, de telle sorte que, lorsque l'écrou est serré, l'extrémité intérieure à élargissement conique (11) du boulon (6) tire tout d'abord le boulon à coin (5) vers l'oreille de montage jusqu'à ce que le manchon à frottement touche l'oreille de montage et ensuite pousse le manchon à frottement élastique (7) contre la surface intérieure de la douille de fixation (4).

2. Mécanisme selon la revendication 1, caractérisé en ce que le manchon à frottement (7) est réalisé en un matériau possédant de bonnes propriétés de frottement, en particulier de caoutchouc.

3. Mécanisme selon la revendication 2, caractérisé en ce que la surface extérieure du manchon à frottement (7) a été traitée d'une manière qui augmente son frottement.

4. Mécanisme selon la revendication 1, caractérisé en ce que, autour de la douille de fixation (4) au voisinage de sa partie supérieure, a été prévu une bague d'arrêt (10).

5. Mécanisme selon la revendication 1, caractérisé en ce que l'extrémité intérieure à élargissement conique (11) du boulon (6), lorsqu'elle est poussée contre la surface intérieure du manchon de fixation (4) du manchon à frottement élastique (7) enserrant le boulon (6), produit une déformation (12) dans la partie inférieure de la douille de fixation (4).

6. Mécanisme selon l'une des revendications précédentes, caractérisé en ce que la profondeur de la douille de fixation (4) correspond environ avec la longueur du manchon de friction (7).
